# FASCICULE DE BREVET EUROPEEN

(11) **EP 0 975 490 B1**
(45) Date de publication et mention de la délivrance du brevet: **06.02.2002**
(21) Numéro de dépôt: 98921553.8
(22) Date de dépôt: 17.04.1998
(51) Int. Cl.: B60R 13/08, G10K 11/16

(54) **GARNITURE DE PAVILLON DE VEHICULE AUTOMOBILE**
DACHAUSKLEIDUNG FÜR FAHRZEUGE
MOTOR VEHICLE HEAD LINING

(30) Priorité: 18.04.1997 FR 9704818
(43) Date de publication de la demande: 02.02.2000
(73) Titulaire: RENAULT, 92109 Boulogne-Billancourt (FR)
(72) Inventeur: GIRARD, Philippe, F-95240 Cormeilles en Parisis (FR); JOSSE, Pascal, F-78500 Sartrouville (FR); ZHANG, Charles, F-78280 Guyancourt (FR)
(86) Numéro de dépôt international: FR9800775
(87) Numéro de publication internationale: WO9847742

(56) Documents cités:
- EP-A- 0 079 253
- DE-A- 2 739 642
- DE-A- 4 123 593

## Description

L'invention concerne une garniture intérieure de pavillon de véhicule automobile constituée par un panneau absorbant acoustique en vue d'atténuer le bruit ambiant dans l'habitacle du véhicule.

L'invention s'applique plus particulièrement à des pavillons qui possèdent une courbure transversale et longitudinale relativement faibles.

La recherche en matière d'isolation phonique de l'habitacle, en vue de conférer au pavillon un pouvoir de transmission des vibrations aussi faibles que possible a déjà conduit à revêtir la surface interne du pavillon d'un matériau stratifié dont une couche est collée sur la face intérieure du pavillon.

La publication FR-A-2314079 décrit un revêtement constitué par une substance élastique poreuse recouverte d'une garniture lourde et adhésive.

Mais ce matériau lourd et dense ne permet pas d'obtenir un bon amortissement des vibrations aux basses fréquences inférieures à 200 Hz.

On a ainsi cherché à atténuer les sons à basse fréquence, en particulier les ondes stationnaires qui s'installent dans la cavité que forme cet habitacle.

La publication FR-A-2516034 décrit une garniture de pavillon selon le préambule de la revendication 1 sur laquelle des zones d'épaisseur plus réduite délimitent avec le pavillon des volumes qui constituent des résonateurs et qui sont disposés au-dessus de l'emplacement de la tête des occupants de l'habitacle.

On sait que les sollicitations vibratoires issues du compartiment moteur sont véhiculées par les membrures support du pavillon vers la tôle de pavillon si bien que la garniture de pavillon ne peut amortir l'ensemble des vibrations transmissibles.

Ainsi le manque de rigidité de la tôle de pavillon ne permet pas l'absorption de l'énergie vibratoire qui lui est transmise.

Le pavillon devient dans ce cas une source d'inconfort acoustique et vibratoire par le bruit et les vibrations qu'il peut transmettre et rayonner.

Dans le but d'éviter la propagation des vibrations à l'air environnant on a proposé de modifier la forme des pièces de carrosserie dans le but de limiter le mouvement vibratoire desdites pièces.

Dans le cas particulier des pièces de carrosserie réalisées sous la forme de panneaux fixes ou articulés, la publication FR-A-2305321 propose de renforcer la face intérieure desdits panneaux par des nervures adaptées à la surface du panneau qui supportent un revêtement d'isolation phonique.

Toutefois, cette manière de procéder n'est pas adaptée à la confection des pavillons de véhicules automobiles destinés à porter un revêtement insonorisant et isolant.

Pour mieux comprendre les différents objets de l'invention il est tenu compte dans ce qui suit de la méthode d'analyse des vibrations d'un élément de structure.

On sait que l'amplitude vibratoire d'un pavillon de véhicule peut atteindre un niveau élevé dans la bande audible de fréquence (50 à 200 Hz) lorsque celui-ci est soumis aux excitations du moteur. A cause de l'existence du mode acoustique de même nature dans l'habitacle, l'état physique de la vibration dans ladite bande de fréquence permet à la cavité délimitée par les parois de l'habitacle d'entrer en résonance et de générer des vibrations sonores très fortes dans une zone occupée par la tête des passagers du véhicule.

L'invention a pour objet un mode de réalisation de la garniture dans le but de modifier la propagation des vibrations à la cavité résonante de l'habitacle.

L'invention a également pour objet une garniture de pavillon qui atténue la propagation à l'habitacle des vibrations dans ladite bande des fréquences.

L'invention a encore pour objet une garniture de pavillon qui évite la transmission d'une pression acoustique ainsi que l'amplification de la pression acoustique qui règne dans l'habitacle.

L'invention a plus particulièrement pour objet une garniture de pavillon destinée à amortir la vibration du panneau constitutif du pavillon, dans le but d'atténuer l'amplification et l'accroissement de la pression acoustique.

Selon l'invention la garniture de pavillon comporte des zones dans lesquelles l'épaisseur de la garniture est réduite et qui délimitent le logement d'un matériau alvéolaire.

La garniture ainsi réalisée permet de réduire sensiblement les zones vibrantes lorsque la fréquence d'excitation génère une vibration du pavillon suivant un mode antisymétrique.

Le garniture ainsi réalisée présente l'avantage d'augmenter sensiblement le confort acoustique de l'habitacle.

D'autres caractéristiques et avantages de l'invention apparaîtront à la lecture de la description d'un exemple de réalisation de la garniture en référence au dessin annexé dans lequel :
- la figure 1 est une représentation perspective d'une portion de l'habitacle avec arrachement partiel de la garniture de pavillon
- la figure 2 est une vue en plan de la face intérieure du pavillon avec arrachement partiel de la garniture
- la figure 3 est une vue en coupe du pavillon selon la ligne III de la figure 2
- la figure 4 est un diagramme représentatif de l'intensité sonore dans l'habitacle du véhicule en fonction des variations de la fréquence de vibration.

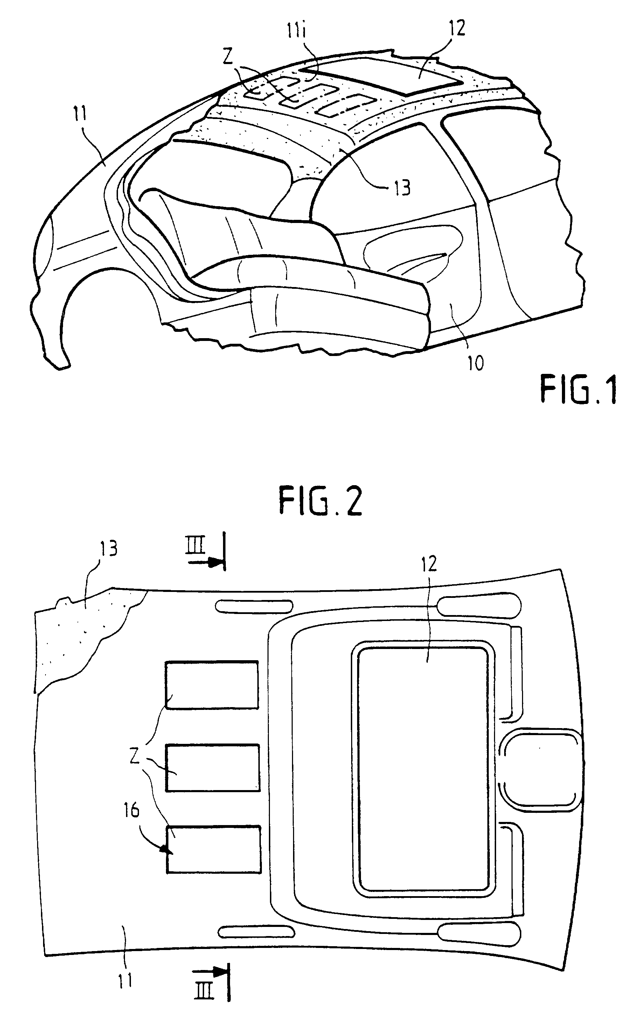

La figure 1 illustre l'habitacle 10 d'un véhicule automobile dont la carrosserie inclut un pavillon 11 percé d'une découpe 12 de toit ouvrant.

La face intérieure 11i du pavillon 11 supporte une garniture 13 collée au panneau de tôle constitutif dudit pavillon 11.

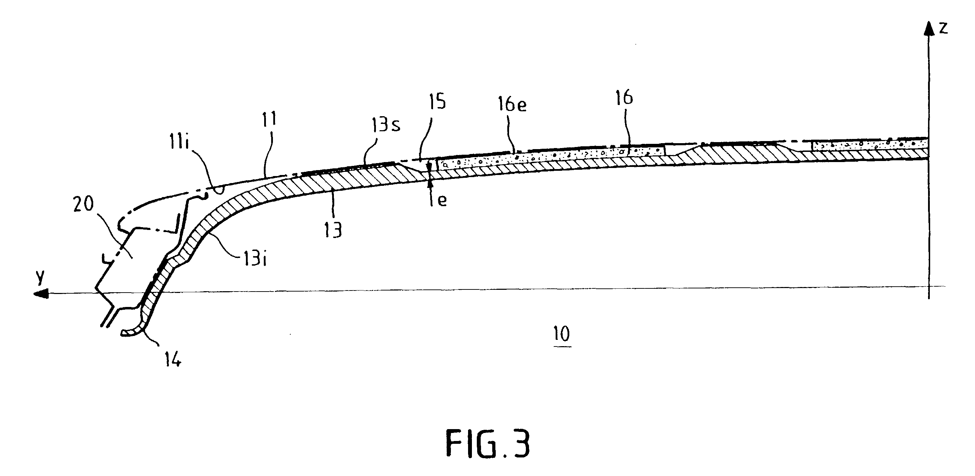

La garniture 13 est constituée ainsi que cela est montré aux figures 2, 3 par un panneau préformé qui possède des bords d'assemblage 14 aux renforts latéraux 20 du pavillon.

Le panneau peut être formé ainsi que cela est connu dans un matériau stratifié perméable aux sons constitué par exemple de fibres agglomérées ou d'une mousse polyuréthanne. Son épaisseur peut être de l'ordre de 6 à 15 mm.

Ainsi que cela est montré à la figure 3, la face inférieure 13i du panneau 13 est tournée vers l'habitacle 10 tandis que sa face supérieure 13s est collée sur une tôle du pavillon 11.

La figure 2 montre la tôle du pavillon 11 sur laquelle sont indiquées des zones "Z" dans lesquelles on se propose de réduire l'épaisseur du panneau de garniture.

A cet effet et ainsi que le montre la figure 3, on prévoit lors de la confection du panneau 13 des zones correspondantes dans lesquelles l'épaisseur "e" de la garniture est réduite et qui délimitent le logement 15 d'un matériau alvéolaire 16 constitué d'une mousse de matière plastique ayant une masse volumique comprise entre 70 et 300g/l et une grosseur de cellule de 0.5 à 2 mm.

Le matériau alvéolaire 16 est constitué par des plaques collées sur le fond des logements 15 répartis transversalement au-dessus de l'emplacement de la tête des occupants du véhicule.

La face extérieure 16e de chaque plaque est localisée dans un plan parallèle au plan de la face de contact du panneau de garniture 13 dans le but de soumettre ladite face 16e des diverses plaques à une force de compression au cours de la phase de collage partiel de la face supérieure 13s dudit panneau sur la face intérieure 11i du pavillon 11. Le collage s'opère de la sorte le long de portées de part et d'autre des divers logements 15.

L'agencement précité du panneau de garniture 13 et des plaques 16 permet la confection de tels sous-ensembles en dehors de la chaîne de fabrication du véhicule.

De ce fait, la face supérieure d'un tel sous-ensemble peut être directement collée sur la face intérieure du pavillon.

L'interface constituée par la surface de collage subit alors l'action des plaques préalablement comprimées en amortissant les vibrations soumises par le pavillon.

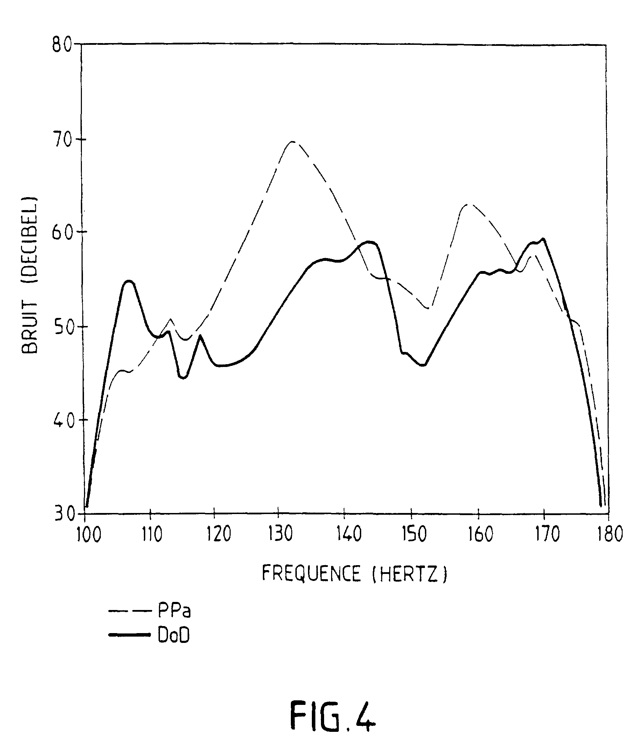

La figure 4 montre par comparaison le niveau sonore généré par le pavillon 11.

La courbe PPa illustre la transmission du bruit par un pavillon porteur d'une garniture conventionnelle.

La courbe DoD illustre la transmission du bruit par un pavillon porteur d'une garniture conforme à l'invention.

La courbe DoD montre plus particulièrement une réduction sensible du niveau sonore dans la plage de fréquences 115 à 160 H_{Z}.

Il en résulte que la garniture conforme à l'invention peut être aisément adaptée aux différents pavillons sans influer sur le dimensionnement de l'habitacle notamment dans la zone occupée par les passagers du véhicule.

## Revendications

1. Garniture de pavillon de véhicule automobile constituée par un panneau (13) formé dans un matériau perméable aux sons qui possède une face inférieure (13i) tournée vers l'habitacle (10) et une face supérieure (13s) collée sur le pavillon (11), **caractérisée par le fait qu'**elle comporte des zones (Z) dans lesquelles l'épaisseur de la garniture est réduite et qui délimitent le logement (15) d'un matériau alvéolaire (16).

2. Garniture de pavillon suivant la revendication 1, **caractérisée par le fait que** le matériau alvéolaire possède une face extérieure soumise à une force de compression et une face inférieure collée à la garniture (13).

3. Garniture de pavillon suivant la revendication 2, **caractérisée par le fait que** les logements (15) du matériau alvéolaire sont réparties transversalement au-dessus de l'emplacement de la tête des occupants du véhicule.

4. Garniture de pavillon suivant l'une quelconque des revendications 1 à 4, **caractérisée par le fait que** la face supérieure de la garniture est collée sur la face intérieure du pavillon et que l'interface est soumise à l'action d'un moyen transmetteur d'effort dans le sens d'un amortissement des vibrations transmises par le pavillon.

## Claims

1. Roof lining for an automotive vehicle constituted by a panel (13) formed in a sound-permeable material that has a lower face (13i) turned towards the compartment (10) and an upper face (13s) glued to the roof (11), **characterised by** the fact that it comprises zones (Z) in which the thickness of the lining is reduced, and which delimit the housing (15) of a cellular material (16).

2. Roof lining according to claim 1, **characterised by** the fact that the cellular material has an exterior face subjected to a compression force, and an inferior face glued to the lining (13).

3. Roof lining according to claim 2, **characterised by** the fact that the housings (15) of the cellular material are divided transversely above the location of the heads of the vehicle occupants.

4. Roof lining according to any one of claims 1 to 4, **characterised by** the fact that the upper face of the lining is glued onto the interior face of the roof, and that the interface is subjected to the action of a load transmitting means in the sense of dampening the vibrations transmitted by the roof.

## Patentansprüche

1. Dachverkleidung eines Kraftfahrzeuges bestehend aus einer Platte (13), die aus einem geräuschdurchlässigen Material gebildet wird und deren Unterseite (13i) der Fahrgastkabine zugewendet ist und deren Oberseite (13s) an das Dach geklebt wird, **dadurch gekennzeichnet, dass** sie Bereiche (Z) umfasst, in denen die Dicke der Verkleidung geringer ist und die die Aufnahme (15) eines wabenförmigen Materials (16) begrenzen.

2. Dachverkleidung nach Anspruch 1, **dadurch gekennzeichnet, dass** das wabenförmige Material eine einer Druckkraft ausgesetzte Außenseite und eine an die Verkleidung (13) geklebte Innenseite aufweist.

3. Dachverkleidung nach Anspruch 2, **dadurch gekennzeichnet, dass** die Aufnahmen (15) des wabenförmigen Materials quer oberhalb der von den Köpfen der Fahrzeuginsassen eingenommenen Stelle verteilt sind.

4. Dachverkleidung nach einem der Ansprüche 1 bis 4, **dadurch gekennzeichnet, dass** die Oberseite der Verkleidung auf die Innenseite des Daches geklebt ist und dass die Zwischenfläche der Wirkung eines kräfteübertragenden Mittels im Sinne einer Dämpfung der von dem Dach übertragenen Vibrationen ausgesetzt ist.
